# EUROPÄISCHE PATENTSCHRIFT

(11) **EP 1 899 882 B1**
(45) Veröffentlichungstag und Bekanntmachung des Hinweises auf die Patenterteilung: **22.08.2018**
(21) Anmeldenummer: 06754565.7
(22) Anmeldetag: 26.06.2006
(51) Int. Cl.: G06F 21/56

(54) **INTEGRITÄTSGESCHÜTZTER DATENTRÄGER**
INTEGRITY-PROTECTED DATA CARRIER
SUPPORT DE DONNEES PROTEGE EN INTEGRITE

(30) Priorität: 27.06.2005 DE 102005029887
(43) Veröffentlichungstag der Anmeldung: 19.03.2008
(73) Patentinhaber: Giesecke+Devrient Mobile Security GmbH, 81677 München (DE)
(72) Erfinder: BARTSCH, Armin, 82194 Gröbenzell (DE)
(86) Internationale Anmeldenummer: PCT/EP2006/006129
(87) Internationale Veröffentlichungsnummer: WO 2007/000295

(56) Entgegenhaltungen:
- EP-A- 1 184 772
- EP-A- 1 330 096
- WO-A-2005/109302
- GB-A- 2 378 783
- US-A- 5 918 008

## Beschreibung

Die Erfindung betrifft ein Verfahren zum Sicherstellen der Datenintegrität eines portablen Datenträgers und einen solchen Datenträger, insbesondere eine Chipkarte, Smart-Card, Massenspeicherkarte, Multimediakarte oder ein USB-fähiges Speichermedium.

Wie bei stationären Computern besteht auch bei den vielfältig verwendeten portablen Datenträgern die Gefahr der Infizierung der gespeicherten Daten durch einen Computerschädling. Computerschädlinge sind kleine bis kleinste Softwarekomponenten, die sich bei einem Datentransfer in der Regel unbemerkt auf dem Datentransfer einnisten und dort zu nachteiligen Effekten führen, beispielsweise zu Datenverlusten oder zu Störungen des regulären Betriebs. Computerschädlinge sind zumeist in den vorhandenen Daten und Dateien für Dritte nicht ohne weiteres ersichtlich integriert und werden mittels eines Schreib oder Lesezugriffs auf die infizierte Datei wirksam. Von den vielen verschiedenen Typen von Computerschädlingen sind insbesondere Viren, Makroviren, trojanische Pferde und Würmer zu nennen, aber auch Dealer, Spam-Mails und Hoaxe. Tragbare Datenträger sind insbesondere deshalb besonders gefährdet, da sie speziell zum Datenaustausch mit vielen verschiedenen Computern verwendet werden und sich deshalb leicht infizieren und weitere Computer wieder infizieren können.

Eine mögliche Sicherheitstechnik ist, eingehende Daten mit vorgegebenen oder benutzerdefinierten Filterregeln zu untersuchen. Damit können jedoch nur relativ oberflächliche Untersuchungen der eingehenden Daten durchgeführt werden. Mit Filterregeln können z.B. Dateinamen, Absender, Text- oder Bildinhalt geprüft werden, um beispielsweise Dateien mit unerwünschten oder jugendgefährdenden Inhalten auszusondern. Eine funktionale Überprüfung auf sich selbst reproduzierende Computerschädlinge wie z. B. Viren, Würmer oder Trojaner, die in den Daten versteckt sind, ist auf diese Weise jedoch nicht möglich.

In diesem Zusammenhang offenbart die WO 03/ 061319 A1 ein digitales Mobilfunknetz, bei dem die Mobilfunkendgeräte vor unerwünschten oder schädigenden Daten durch eine zentrale, netzseitige Überprüfung angeforderter oder versendeter Daten geschützt werden. Eine solche im Mobilfunkbereich praktikable zentralisierte Lösung, ist zum Schutz von beliebigen tragbaren Datenträgern jedoch nicht geeignet.

EP 1330096 A2 zeigt einen Virenscanner auf einem Mobilfunkgerät, der Prüfmuster für die Virenprüfung von einem zentralen Server erhält.

Es ist deshalb eine Aufgabe der vorliegenden Erfindung, einen tragbaren Datenträger mit effizientem Schutz der Integrität der auf ihm gespeicherten Daten bereitzustellen.

Diese Aufgabe wird erfindungsgemäß durch ein Verfahren und durch einen tragbaren Datenträger mit den Merkmalen der unabhängigen Ansprüche gelöst. In davon abhängigen Ansprüchen sind vorteilhaftere Ausgestaltungen und Weiterbildungen der Erfindung angegeben.

Erfindungsgemäß umfasst ein tragbarer Datenträger einen veränderlichen bzw. wiederbeschreibbaren Speicher und einen Prozessor zum Durchführen administrativer Aufgaben im Rahmen einer Datenübertragung. Die Integrität der in dem wiederbeschreibbaren Speicher gespeicherten Daten wird von einer Prüfeinrichtung des Datenträgers selbst sichergestellt, indem die Prüfeinrichtung die in dem wiederbeschreibbaren Speicher gespeicherten Daten in Abhängigkeit von zumindest einer vorgegebenen Bedingung auf einen Befall mit Computerschädlingen prüft.

Die Integrität der Daten wird durch diese direkt auf dem Datenträger befindliche Prüfeinrichtung unmittelbar und fortdauernd sichergestellt, da sie sowohl auf den Datenträger übertragene Daten als auch Daten, die bereits in dem wiederbeschreibbaren Speicher gespeichert sind, zu jedem beliebigen Zeitpunkt, zu dem der Datenträger aktiv ist, prüfen kann.

Die eigentliche Prüfung wird anhand von auf dem Datenträger gespeicherten Schädlingsinformationen über potentielle Computerschädlinge geprüft. Die Schädlingsinformationen umfassen insbesondere Schädlingsmuster, die in mit einem bestimmten Computerschädling infizierten Daten vorzufinden sind. Die Überprüfung besteht dann aus einem Vergleichen der Daten mit den der Prüfeinrichtung bekannten Schädlingsmustern. Hierbei ist es besonders vorteilhaft, nicht die vollständigen Daten bestehend aus Nutzdaten und Verwaltungsdaten zu prüfen, sondern lediglich die Nutzdaten, da sich Computerschädlinge wie z. B. Viren und Würmer dort vorzugsweise unbemerkt einnisten.

Dies hat den Vorteil, dass solche Computerschädlinge unmittelbar erkannt werden können, deren Präsenz nicht aus den Verwaltungsdaten, also der Information über Besitzer, Absender, Größe, Datentyp, Dateinamen u.s.w. hervorgehen, sondern die in den Nutzdaten versteckt sind.

Dies gilt insbesondere für ausführbare Binärdateien, die mit Viren, Würmern oder Trojanern in Form von integrierten Binärsequenzen infiziert sind. Diese für einen bestimmten Computerschädling charakteristischen Binärsequenzen repräsentieren die Schädlingsmuster, anhand derer die Prüfeinrichtung einen Computerschädling identifizieren kann.

Vorzugsweise werden die Schädlingsinformationen bzw. Schädlingsmuster in einem besonders gegen externe Manipulation gesicherten Speicherbereich des Datenträgers abgelegt, so dass es unmöglich ist, dass ein Computerschädling die Schädlingsinformationen gezielt manipuliert, um danach seine schädigende Wirkung unbemerkt zu entfalten. Aus demselben Grund ist es sinnvoll, auch die Prüfeinrichtung in einer besonders sicheren Art und Weise auf dem portablen Datenträger zu implementieren. Wenn die Prüfeinrichtung als vom Prozessor des Datenträgers ausführbare Softwarekomponente im Datenträger vorliegt, kann diese ebenfalls in einem manipulationssicheren Speicherbereich des Datenträgers abgelegt sein, beispielsweise in einem ROM-Speicher. Auch ist es möglich, die Prüfeinrichtung in Form eines separaten Co-Prozessors und/oder Sicherheitschips zu realisieren.

Die Überprüfung der gespeicherten Daten wird in Abhängigkeit von zumindest einer vorgegebenen Bedingung durchgeführt. So kann die Prüfeinrichtung beispielsweise die Prüfung dann durchführen, wenn der Datenträger aktiviert wird, beispielsweise durch Anschließen an einen externen Computer. Wenn eine Prüfung unterbrochen wird, beispielsweise durch ein Deaktivieren des Datenträgers, wird dies auf dem Datenträger von der Prüfeinrichtung vermerkt, so dass die Prüfung beim nächsten Aktivieren des Datenträgers an der Stelle der Unterbrechung fortgesetzt werden kann.

Ebenso kann die Prüfeinrichtung die Daten dann prüfen, wenn ein Schreibzugriff und/oder ein Lesezugriff auf die Daten erfolgt, da Computerschädlinge in der Regel ihre schädigende Wirkung lediglich bei Zugriffen auf die infizierten Dateien entfalten können. Falls die Daten in einem wiederbeschreibbaren Speicher in Dateien bzw. einem aus Verzeichnissen und Dateien bestehenden Dateisystem organisiert sind, kann die Prüfung anhand bestimmter Attribute der Dateien und Verzeichnisse durchgeführt werden. So ist es beispielsweise möglich, sämtliche Dateien in einem bestimmten Verzeichnis zu prüfen und/oder Dateien eines bestimmten anhand der Dateiendung identifizierbaren Datentyps zu prüfen, z. B. ausführbare EXE-Dateien oder DLL-Bibliotheksdateien. Darüber hinaus gibt es in einem Dateisystem viele weitere mögliche Attribute, z. B. das Erzeugungsdatum der Datei, Benutzerrechte, Besitzer, Erzeuger, etc.

Ebenso ist es möglich, Daten in Abhängigkeit des Speicherbereichs, in dem sie sich befinden, zu prüfen, beispielsweise eine bestimmte Partition oder ein adressierbares Speichersegment.

Zur eigentlichen Prüfung kann die Prüfeinrichtung verschiedene Prüfalgorithmen zu unterschiedlichen Zeitpunkten oder für unterschiedliche Zugriffsarten, Dateitypen oder Schädlingstypen einsetzen.

Besonders zweckmäßig ist es, die Prüfung als Hintergrundprozess durchzuführen, so dass sie einerseits permanent durchgeführt werden kann und andererseits aufgrund einer niedrigen Priorität andere Prozesse des Prozessors des Datenträgers nicht behindert.

Als ergänzende Komponente umfasst der Datenträger eine Eliminiereinrichtung, die von der Prüfvorrichtung identifizierte Computerschädlinge eliminiert. Das Eliminieren kann dann darin bestehen, den Schädling zu entfernen, indem er aus den infizierten Daten rückstandsfrei entfernt wird. Ebenso kann die infizierte Datei gelöscht oder für eine spätere Behandlung markiert werden und/oder es kann eine entsprechende Schutzbenachrichtigung an den Benutzer versandt werden.

Auch ist es möglich, die infizierten Daten zu einer späteren Analyse in ein Quarantäneverzeichnis zu verschieben.

Da sich Arten, Wirkungsweisen und Verbreitungsmechanismen von Computerschädlingen ständig verändern, ist es zur Wahrung der Datenintegrität des Datenträgers zweckmäßig, eine Aktualisierungseinrichtung vorzusehen, die die auf dem Datenträger vorhandenen Schädlingsinformationen aktualisiert. Diese Aktualisierung kann in regelmäßigen Abständen oder ereignisgesteuert automatisch durchgeführt, oder von einem Benutzer initiiert werden. Bei der Aktualisierung wird eine Verbindung zwischen dem Datenträger und einem Sicherheitsserver aufgebaut, und die jeweils aktuellen Schädlingsinformationen werden in den dafür vorgesehenen Speicherbereich des Datenträgers eingespielt. Da dieser Vorgang unmittelbar sicherheitsrelevant ist, ist es zweckmäßig, vor der eigentlichen Aktualisierung eine Authentisierung entweder des Sicherheitsservers oder der Person durchzuführen, die die Aktualisierung durchführt. Die Authentisierung kann dann mittels Übertragung oder Eingabe einer PIN, eines Passwortes oder einer biometrischen Authentisierung erfolgen.

Besonders bevorzugt ist der Datenträger eine Massenspeicherkarte, eine Multimedia Card, eine optische Speicherkarte, ein USB-Speicherstick, eine portable Festplatte oder dergleichen. Besonders bevorzugt ist der Datenträger eine Chipkarte gemäß der Norm ISO 7816-1, also eine herkömmliche Chipkarte vom Kreditkartenformat. Besonders vorteilhaft ist der Einsatz der vorliegenden Erfindung bei der Verwendung von ungeschützten bzw. unpersonalisierten portablen Datenträgern, die beim Datentransfer keine zusätzlichen Sicherheitsprüfungen durchführen. Datenträger, die beim Datentransfer etwa die Überprüfung einer Identität, einer Signatur oder Prüfsumme vorsehen, sind zumeist ohnehin besser vor einem Befall mit Computerschädlingen geschützt, da sie in der Regel nur signierte Daten abspeichern.

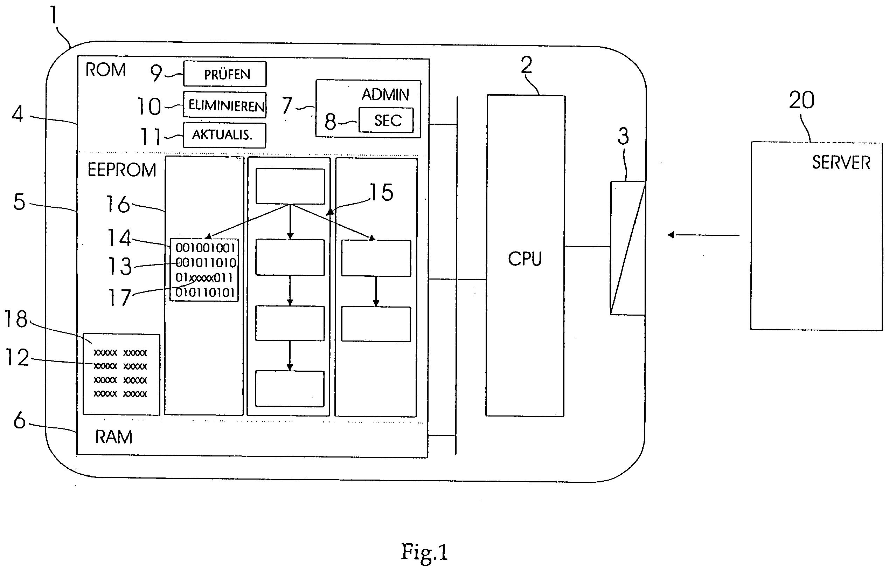

Weitere Merkmale der Erfindung ergeben sich aus der folgenden Beschreibung verschiedener erfindungsgemäßer Beispiele und Ausführungsalternativen. Es wird auf Figur 1 als einzige Figur verwiesen, die eine Chipkarte als Beispiel eines erfindungsgemäßen Datenträgers zeigt.

Die vorliegende Erfindung ist prinzipiell auf alle Arten und Ausführungen von portablen Datenträgern anwendbar, die mit Rechenleistung z.B. in Form eines Prozessors ausgestattet sind. Hierzu zählen neben der im folgenden beschriebenden Ausführungsform als Chipkarte bzw. SmartCard insbesondere Massenspeicherkarten, Multimediakarten, optische Speicherkarten, USB-Speichersticks bzw. -tokens und portable Festplatten.

Figur 1 zeigt den herkömmlichen Aufbau einer Chipkarte 1, umfassend einen Prozessor 2, eine Speicheranordnung bestehend aus einem permanenten ROM-Speicher 4, einem wiederbeschreibbaren Speicher 5 und einem flüchtigen RAM-Speicher 6, sowie eine Schnittstelle 3 zur Kommunikation und zum Datenaustausch mit anderen Geräten. Der wiederbeschreibbare Speicher 5 kann hierbei aus einem EEPROM-Speicher, einem Flash-Speicher oder einem sonstigen zum Speichern und Löschen von Nutzdaten geeigneten Speichertyp bestehen. Die wesentlichen administrativen Funktionen, wie z. B. die Steuerung der Kommunikation mit einem externen Gerät oder die eigentliche Organisation oder Strukturierung des wiederbeschreibbaren Speichers 5, werden von einer Verwaltungseinheit 7 bereitgestellt, die auch als Betriebssystem des Datenträgers 1 bezeichnet werden kann. Üblicherweise liegt eine solche Verwaltungseinheit 7 im ROM-Speicher 4 des Datenträgers 1, da sie unveränderliche Routinen bereitstellt. Die Verwaltungseinheit 7 kann jedoch auch zumindest teilweise in dem wiederbeschreibbaren Speicher 5 untergebracht sein, beispielsweise wenn ein Datenträger keinen permanenten ROM-Speicher 4 besitzt, sondern nur einen wiederbeschreibbaren Speicher 5.

Neben dem flüchtigen Speicher 6, der lediglich als Arbeitsspeicher des Prozessors 2 dient, präsentiert der wiederbeschreibbare Speicher 5 das eigentliche Speichermedium für Nutzdaten, wie z. B. Video- und Audio-Daten, Textdaten und Daten in proprietären Datenformaten bestimmter Anwendungsprogramme. Die in dem wiederbeschreibbaren Speicher 5 abgelegten Daten 13 sind in der Regel in Form von Dateien 14 eines Dateisystems 15 organisiert, das mittels Verzeichnissen hierarchisch aufgebaut ist. Der wiederbeschreibbare Speicher 5 kann auch in Speicherbereiche 16 unterteilt sein, beispielsweise einzelne Partitionen oder zusammenhängend adressierbare Speichersegmente.

Da der permanente ROM-Speicher 4 vor Manipulationen gänzlich geschützt ist, ist es zweckmäßig, die zur Prüfung auf einen Befall der Daten 13 mit einem Computerschädling 17 benötigte Prüfeinrichtung 9, Eliminiereinrichtung 10 und Aktualisierungseinrichtung 11 in dem ROM-Speicher 4 vorzusehen. In diesem Ausführungsbeispiel sind die Prüf-, Eliminier- und Aktualisiereinrichtung 9, 10, 11 als vom Prozessor 2 ausführbare Software-Komponenten realisiert. Ebenso gut können diese drei Einrichtungen im wiederbeschreibbaren Speicher 5 abgelegt sein oder in Form eines Sicherheitschips mit einem eigenen Prozessor realisiert werden.

Die Prüfung der im wiederbeschreibbaren Speicher 5 gespeicherten Daten 13 auf einen Befall mit einem Computerschädling 17 wird anhand von Schädlingsinformationen durchgeführt, die bestimmte Identifikationsmerkmale eines Computerschädlings bereitstellen, anhand derer der Schädling in den Daten 13 identifiziert werden kann. Diese Schädlingsinformationen sind in der Regel Schädlingsmuster 12 (bzw. Schädlingssignaturen oder Schädlingsdefinitionen), die individuelle Sequenzen darstellen, die in infizierten Dateien 14 durch die Prüfeinrichtung 9 nachweisbar sind.

Anders als bei herkömmlichen Filterverfahren, die lediglich die Verwaltungsdaten einer Datei 14, d. h. Erzeugungsdatum, Besitzer, Dateiname, etc. untersuchen, und so lediglich sehr leicht erkennbare Computerschädlinge wie z. B. Dateien mit bestimmten Namensanteilen erkennen, vergleicht die Prüfeinrichtung 9 die Nutzdaten einer Datei 14 mit dem Schädlingsmuster 12, um einen Computerschädling 17 zu identifizieren. Die Schädlingsmuster 12 repräsentieren insofern Binär- oder Bitsequenzen, die in den üblicherweise nicht im Klartextformat sondern im Binärformat abgespeicherten Daten auftreten.

Da die Schädlingsmuster 12 häufiger aktualisiert werden müssen, ist es zweckmäßig, diese im wiederbeschreibbaren Speicher 5 abzulegen. Da die Schädlingsmuster 12 jedoch für die Datenintegrität des gesamten Datenträgers höchst sicherheitskritische Informationen repräsentieren, ist es besonders vorteilhaft, diese in einem gegen Manipulation besonders abgesicherten Speicherbereich 18 des wiederbeschreibbaren Speichers 5 abzulegen. Dieser Speicherbereich 18 kann beispielsweise dadurch abgesichert werden, dass auf ihn nur nach einer Authentisierung zugegriffen werden kann, so dass eine Manipulation der Schädlingsmuster 12 von unberechtigter Seite ausgeschlossen werden kann.

Die eigentliche Prüfung der gespeicherten Daten 13 und Dateien 14 kann nach unterschiedlichen Kriterien initiiert und durchgeführt werden. Sämtliche nachfolgend beschriebenen Varianten können sowohl einzeln als auch in Kombination miteinander von der Prüfeinrichtung 9 ausgeführt werden. Hierbei ist es besonders vorteilhaft, dass die einzelnen Varianten von einem Benutzer des Datenträgers 1 ausgewählt bzw. frei konfiguriert werden können, beispielsweise über eine von der Prüfeinrichtung 9 auszulesende Konfigurationsdatei im sicheren Speicherbereich 18 des wiederbeschreibbaren Speichers 5.
- Prüfung im Hintergrund: Hierbei erfolgt die Prüfung der Daten 13 durch die Prüfeinrichtung 9 als Hintergrundprozess unabhängig von anderen Ereignissen wie z.B. Schreib- oder Lesezugriffen. Dieser Hintergrundprozess kann prinzipiell mit dem Aktivieren des Datenträgers 1 gestartet werden und während der gesamten Betriebsdauer des Datenträgers 1 arbeiten. Der Hintergrundprozess kann eine Prüfung kontinuierlich wiederholend oder zu vorgegebenen oder benutzerdefinierten regelmäßigen Zeitpunkten oder auch zufallsgesteuert durchführen. Die Prüfung kann beim Aktivieren des Datenträgers 1 automatisch ausgelöst werden. Um ein regelmäßiges Prüfen aller Daten 13 sicherzustellen, kann vorgesehen sein, dass eine durch eine Deaktivierung des Datenträgers 1 eventuell unterbrochene Prüfung nach der darauf folgenden Aktivierung dort wieder aufgenommen wird, wo die Prüfung unterbrochen wurde. Derartige Strategien werden in der Prüfeinrichtung 9 umgesetzt, wobei bei Unterbrechung einer Prüfung z.B. ein Flag gesetzt werden kann, das beim nächsten Aktivieren des Datenträgers 1 den unterbrochenen Prüfprozess anzeigt.
- Zugriffgesteuerte Prüfung: Die Prüfung von Daten 13 wird ausgelöst, wenn als Bedingung bestimmte Ereignisse auftreten, beispielsweise ein Zugriff auf die Daten 13 durch einen Schreib- oder Leseprozess. Zusätzlich können verschiedene Zusatzbedingungen abgefragt werden, z. B. die Art des Zugriffs, die verstrichene Zeit seit der letzten Prüfung, die Vertrauenswürdigkeit des Urhebers der Daten, etc. Im einfachsten Fall führt jeder Schreib- und/oder Lesevorgang zu einer Prüfung der betroffenen Daten 13 oder der betroffenen Datei 14. Auch ist es zweckmäßig, bei einem Datenzugriff nicht nur die Daten 13 bzw. die Datei 14 selbst zu prüfen, sondern alle Daten in einer bestimmten physikalischen oder logischen Umgebung zu den zugegriffenen Daten 13.
- Prüfen ausgewählter Dateien: Falls die im wiederbeschreibbaren Speicher 5 gespeicherten Daten 13 in einem Dateisystem 15 organisiert sind, das insofern Dateinamen, Dateitypen, Erzeugungsdaten, Urheber, Dateigröße, etc. als Dateiattribute protokolliert, kann die Prüfung auch auf Dateien 14 mit bestimmten Attributen beschränkt werden. So ist es z. B. zweckmäßig, Dateien 14 mit bestimmten Dateiendungen, die auf eine ausführbare Datei schließen lassen, wie z. B. EXE und DLL zu prüfen. Ebenso können Dateien 14 geprüft werden, die in bestimmten proprietären Dateiformaten bestimmter Applikationen gespeichert sind, die Makro- und Skriptsprachen zur Verfügung stellen und deren Dateien in der Umgebung der Applikation insofern ebenfalls ausführbar sind. Hierzu gehören insbesondere die Dateien größerer herkömmlicher Textverarbeitungs-, Tabellenkalkulations- und Datenbankanwendungssysteme. Selbstverständlich können auch Dateien 14 mit bestimmten Attributen von der Prüfung explizit ausgeschlossen werden, wie z. B. reine Textdateien die sich an der Endung TXT - erkennen lassen. In dem hierarchischen Dateisystem 15 kann die Prüfung darüber hinaus auf Dateien 14 innerhalb oder außerhalb gewisser Unterverzeichnisse beschränkt werden.
- Prüfung ausgewählter Speicherbereiche: Der gesamte wiederbeschreibbare Speicher 5 kann in verschiedene Speicherbereiche 16 unterteilt sein, die sich anhand physikalischer oder logischer Kriterien, wie z. B. einer Speichersegmentierung, ergeben. Für jeden dieser Bereiche lässt sich separat festlegen, ob, wann und in welcher Form die Prüfeinrichtung einer Prüfung auf den Befall mit Computerschädlingen 17 durchführen soll.

Die vorgenannten Varianten können frei kombiniert werden, so dass es beispielsweise möglich ist, bestimmte Dateien 14 oder Verzeichnisse unabhängig von Schreib- oder Lesezugriffen als Hintergrundprozess kontinuierlich zu prüfen, während andere Dateien 14 oder Verzeichnisse zugriffsgesteuert und in einem bestimmten Speicherbereich 16 geprüft werden.

Darüber hinaus ist es möglich, dass die Prüfeinrichtung verschiedene Prüfalgorithmen verwendet, die beispielsweise genauer spezialisiert sind, z. B. auf bestimmte Dateitypen oder Typen von Computerschädlingen 17. Insofern kann die Prüfeinrichtung 9 bei jeder Prüfung einen geeigneten Prüfalgorithmus auswählen oder aus Sicherheitsgründen die Prüfalgorithmen regelmäßig wechseln.

Nachdem ein Computerschädling 17 durch die Prüfeinrichtung 9 identifiziert wurde, wird er bei einer bevorzugten Ausführungsform der Erfindung durch eine Eliminiereinrichtung 10 unschädlich gemacht. Hierzu gibt es prinzipiell mehrere verschiedene Möglichkeiten, die in erster Linie von der Art des identifizierten Computerschädlings 17 abhängen.

Wenn sich der Computerschädling 17 in den Daten 13 genau lokalisieren lässt, kann er möglicherweise rückstandsfrei entfernt werden, so dass die Daten 13 weiterhin in vollem Umfang zur Verfügung stehen. Falls dies nicht möglich ist, kann es zweckmäßig sein, eine infizierte Datei 14 vollständig zu löschen, so dass zwar die Nutzdaten der Datei 14 verloren gehen, der Computerschädling 17 aber unschädlich gemacht wird. Alternativ ist es auch möglich infizierte Dateien 14 zur späteren Analyse in ein Quarantäneverzeichnis zu verschieben oder dorthin zu kopieren. Ebenso können befallene Dateien 14 zur späteren Behandlung markiert werden.

Das Entfernen des Computerschädlings 17 ist in der Regel dann möglich, wenn seine genaue Arbeitsweise bekannt ist, so dass er aus den Daten 13 so entfernt werden kann, dass der ursprüngliche Inhalt des wiederbeschreibbaren Speichers 5 wieder hergestellt wird. Falls dies nicht möglich ist, können die befallenen Daten 13 gelöscht werden, indem ein Teil des von dem Computerschädling 17 befallenen Datenbereichs oder der gesamte Bereich gelöscht wird, beispielsweise durch Überschreiben der infizierten Daten mit Nullen.

Beim Markieren ist es demgegenüber möglich, eine separate Tabelle mit den befallenen Dateien 14 oder deren Speicheradressen zu führen, oder es wird im Dateisystem 15 ein spezielles Attribut eingeführt, das auf mit einem Computerschädling 17 befallene Dateien 14 hinweist. Aufgrund der Markierung kann der Benutzer oder das auf den Datenträger zugreifende System zu einem späteren Zeitpunkt vor dem Computerschädling gewarnt werden und das weitere Vorgehen eingeleitet werden.

Die Datenintegrität eines Datenträgers 1 kann nur dann sichergestellt werden, wenn die Schädlingsinformationen bzw. Schädlingsmuster 12 regelmäßig aktualisiert werden, so dass auf neue Gefährdungen adäquat reagiert werden kann.

Wie bereits erwähnt, ist es sinnvoll, die Schädlingsinformationen bzw. die Schädlingsmuster 12 in einem besonders gegen externe Manipulation gesicherten Speicherbereich 18 im wiederbeschreibbaren Speicher 5 abzulegen. Der Inhalt des Speicherbereichs 18 ist nur unter besonderen Sicherheitsvorkehrungen modifizierbar. Beispielsweise kann eine Sicherheitseinrichtung 8, die separat oder als Teil der Verwaltungseinheit 7 realisiert sein kann, vor der Aktualisierung der Schädlingsmuster 12 durch eine Aktualisierungseinrichtung 11 eine Authentisierung des Benutzers verlangen und/oder eine Signatur der zur Aktualisierung verwendeten Daten überprüfen. Die Aktualisierung durch die Aktualisierungseinrichtung 11 kann durch den Benutzer des Datenträgers 1, durch einen Sicherheitsserver 20 oder durch den tragbaren Datenträger 1 eingeleitet werden. Vorteilhaft ist auch hier eine Konfigurationsmöglichkeit für den Benutzer, um zwischen den verschiedenen Aktualisierungsmöglichkeiten der Schädlingsinformation 12 zu wählen.

Möglich ist hierbei beispielsweise eine aktive Aktualisierung durch den Benutzer. Dabei verschafft sich der Benutzer die aktuellen Schädlingsmuster 12 und lädt sie über ein mit dem Datenträger 1 verbundenes Gerät in den sicheren Speicherbereich 18 des Datenträgers 1. Dabei kann unter anderem eine Benutzerauthentisierung und/oder eine Authentisierung des Datenträgers 1 gegenüber dem Gerät verlangt werden und/oder eine Signatur der aktuellen Schädlingsmuster 12 geprüft werden. Ebenso ist eine Aktualisierung durch ein externes Computersystem möglich, z.B. direkt durch einen Sicherheitsserver 20. Dazu wird ein Computersystem mit dem tragbaren Datenträger 1 in Verbindung gebracht. Der Computer beschafft automatisch (z. B. bei jeder Aktivierung des Datenträgers 1 oder in regelmäßigen Zeitabständen oder nach Benachrichtigung durch den Anbieter der Prüfeinrichtung etc.) einen aktualisierten Datensatz der Schädlingsmuster 12 und lädt diesen in den sicheren Speicherbereich 18 des Datenträgers 1. Dabei kann unter anderem eine Authentisierung des Benutzers (z. B. eine PIN-Abfrage) und/oder eine Authentisierung des Computersystems gegenüber dem Datenträger 1 und/oder eine Authentisierung des Datenträgers 1 gegenüber dem Computersystem verlangt werden und/oder eine Signatur der aktualisierten Schädigungsmuster 12 geprüft werden.

Ebenso ist eine eigenständige Aktualisierung durch den tragbaren Datenträger 1 möglich. Dabei wird über ein mit dem Datenträger 1 verbundenes Gerät und gegebenenfalls ein mit diesem Gerät verbundenes Netzwerk ein Kontakt mit einem Sicherheitsserver 20 aufgenommen, der die aktualisierten Schädlingsmuster bereit hält. Dieser Server 20 übermittelt die Schädlingsmuster an den Datenträger 1. Dabei kann unter anderem eine Benutzerauthentisierung (z. B. PIN-Abfrage) und/oder eine Authentisierung des Geräts gegenüber dem Datenträger 1 und/oder eine Authentisierung des Servers 20 gegenüber dem Datenträger 1 und/oder dem Gerät und/oder eine Authentisierung des Datenträgers 1 gegenüber dem Computersystem verlangt werden und/oder eine Signatur der Schädlingsmuster 12 geprüft werden.

## Patentansprüche

1. Verfahren zum Sicherstellen der Integrität von in einem wiederbeschreibbaren Speicher (5) einer Chipkarte als portablem Datenträger (1) befindlichen Daten (13), mit dem Schritt des Prüfens der Daten (13) auf Befall mit Computerschädlingen (17) in Abhängigkeit von zumindest einer vorgegebenen Bedingung, **dadurch gekennzeichnet, dass** das Verfahren von dem Datenträger (1) durchgeführt wird und dass beim Schritt des Prüfens die Daten (13) anhand von auf dem Datenträger (1) gespeicherten Schädlingsinformationen über potentielle Computerschädlinge (17) geprüft werden.

2. Verfahren nach Anspruch 1, **dadurch gekennzeichnet, dass** die Schädlingsinformationen in befallenen Daten (13) befindliche Schädlingsmuster (12) umfassen und beim Schritt des Prüfens die Daten (13) nach den Schädlingsmustern (12) durchsucht werden.

3. Verfahren nach Anspruch 2, **dadurch gekennzeichnet, dass** die Daten (13) Verwaltungsdaten und Nutzdaten umfassen und beim Schritt des Prüfens nur die Nutzdaten nach Schädlingsmustern (12) durchsucht werden.

4. Verfahren nach einem der Ansprüche 1 bis 3, **dadurch gekennzeichnet, dass** der Schritt des Prüfens durchgeführt wird, wenn als Bedingung der Datenträger (1) aktiviert wird.

5. Verfahren nach einem der Ansprüche 1 bis 4, **dadurch gekennzeichnet, dass** ein durch ein Deaktivieren des Datenträgers (1) unterbrochenes Prüfen beim nächsten Aktivieren des Datenträgers (1) fortgesetzt wird.

6. Verfahren nach einem der Ansprüche 1 bis 5, **dadurch gekennzeichnet, dass** der Schritt des Prüfens durchgeführt wird, wenn als Bedingung ein Schreibzugriff und/oder ein Lesezugriff auf die Daten (13) erfolgt.

7. Verfahren nach einem der Ansprüche 1 bis 6, **dadurch gekennzeichnet, dass** die Daten (13) in dem wiederbeschreibbaren Speicher (5) in Dateien (14) organisiert sind und beim Schritt des Prüfens Dateien (14) geprüft werden, die als Bedingung vorgegebene Attribute besitzen.

8. Verfahren nach einem der Ansprüche 1 bis 7, **dadurch gekennzeichnet, dass** der veränderliche Speicher (5) in Speicherbereichen (16) organisiert ist und beim Schritt des Prüfens die in einem vorgegebenen Speicherbereich (16) vorliegenden Daten (13) geprüft werden.

9. Verfahren nach einem der Ansprüche 1 bis 8, **dadurch gekennzeichnet, dass** beim Schritt des Prüfens unterschiedliche Prüfalgorithmen verwendet werden.

10. Verfahren nach einem der Ansprüche 1 bis 9, **dadurch gekennzeichnet, dass** der Schritt des Prüfens als Hintergrundprozess durchgeführt wird.

11. Verfahren nach einem der Ansprüche 1 bis 10, **gekennzeichnet durch** den Schritt des Eliminierens eines Computerschädlings (17) aus befallenen Daten (13), falls beim Schritt des Prüfens ein Computerschädling (17) identifiziert wird.

12. Verfahren nach Anspruch 11, **dadurch gekennzeichnet, dass** beim Schritt des Eliminierens der Computerschädling (17) aus den Daten (13) rückstandsfrei entfernt wird oder eine mit dem Computerschädling (17) befallene Datei (14) gelöscht oder markiert wird.

13. Verfahren nach einem der Ansprüche 1 bis 12 mit Anspruch 1, **dadurch gekennzeichnet, dass** die Schädlingsinformationen in einem besonders gesicherten Speicherbereich (18) des Datenträgers (1) abgelegt ist und durch den Schritt des Aktualisierens der Schädlingsinformationen mittels Einspielen von aktuellen Schädlingsinformationen von einem Sicherheitsserver (20) in den gesicherten Speicherbereich (18).

14. Verfahren nach Anspruch 13, **dadurch gekennzeichnet, dass** beim Schritt des Aktualisierens eine Authentisierung des Sicherheitsservers (20) oder einer die Aktualisierung durchführenden Person durchgeführt wird.

15. Chipkarte als portabler Datenträger (1) umfassend einen wiederbeschreibbaren Speicher (5), einen Prozessor (2) und eine Prüfeinrichtung (9), **dadurch gekennzeichnet, dass** die Prüfeinrichtung (9) eingerichtet ist, in dem wiederbeschreibbaren Speicher (5) befindliche Daten (13) in Abhängigkeit von zumindest einer vorgegebenen Bedingung auf Befall mit Computerschädlingen (17) zu prüfen und dass die Chipkarte (1) einen gesonderten Speicherbereich umfasst, in dem Schädlingsinformationen über potentielle Computerschädlinge (17) abgespeichert sind, und die Prüfeinrichtung (9) eingerichtet ist, die Daten (13) anhand der Schädlingsinformationen zu prüfen.

16. Chipkarte (1) nach Anspruch 15, **dadurch gekennzeichnet, dass** der gesonderte Speicherbereich ein gegen Manipulation besonders gesicherter Speicherbereich (18) ist.

17. Chipkarte (1) nach Anspruch 15 oder 16, **dadurch gekennzeichnet, dass** die Schädlingsinformationen Schädlingsmuster (12) umfassen, die in mit einem Computerschädling (17) befallenen Daten (13) auftreten können, und die Prüfeinrichtung (9) eingerichtet ist, die Daten (13) nach den Schädlingsmustern (12) zu durchsuchen.

18. Chipkarte (1) nach Anspruch 17, **dadurch gekennzeichnet, dass** die Daten (13) Verwaltungsdaten und Nutzdaten umfassen und die Prüfeinrichtung (9) eingerichtet ist, nur die Nutzdaten nach Schädlingsmustern (12) zu durchsuchen.

19. Chipkarte (1) nach einem der Ansprüche 15 bis 18, **dadurch gekennzeichnet, dass** die Prüfeinrichtung (9) eingerichtet ist, die Daten (13) zu prüfen, wenn als Bedingung die Chipkarte (1) aktiviert wird.

20. Chipkarte (1) nach einem der Ansprüche 15 bis 19, **dadurch gekennzeichnet, dass** die Prüfeinrichtung (9) eingerichtet ist, ein durch ein Deaktivieren der Chipkarte (1) unterbrochenes Prüfen beim nächsten Aktivieren der Chipkarte (1) fortzusetzen.

21. Chipkarte (1) nach einem der Ansprüche 15 bis 20, **dadurch gekennzeichnet, dass** die Prüfeinrichtung (9) eingerichtet ist, die Daten (13) zu prüfen, wenn als Bedingung ein Schreibzugriff und/ oder Lesezugriff auf die Daten (13) erfolgt.

22. Chipkarte (1) nach einem der Ansprüche 15 bis 21, **dadurch gekennzeichnet, dass** die Daten (13) in dem wiederbeschreibbaren Speicher (5) in Dateien (14) organisiert sind und die Prüfeinrichtung (9) eingerichtet ist, solche Dateien (14) zu prüfen, die als Bedingung vorgegebene Attribute besitzen.

23. Chipkarte (1) nach einem der Ansprüche 15 bis 22, **dadurch gekennzeichnet, dass** der wiederbeschreibbare Speicher (5) in Speicherbereichen (16) organisiert ist und die Prüfeinrichtung (9) eingerichtet ist, die in einem vorgegebenen Speicherbereich (16) vorliegenden Daten (13) zu prüfen.

24. Chipkarte (1) nach einem der Ansprüche 15 bis 23, **dadurch gekennzeichnet, dass** die Prüfeinrichtung (9) eingerichtet ist, unterschiedliche Prüfalgorithmen zu verwenden.

25. Chipkarte (1) nach einem der Ansprüche 15 bis 24, **dadurch gekennzeichnet, dass** die Prüfeinrichtung (9) eingerichtet ist, das Prüfen der Daten (13) als Hintergrundprozess durchzuführen.

26. Chipkarte (1) nach einem der Ansprüche 16 bis 25, **dadurch gekennzeichnet,** die Chipkarte (1) des weiteren eine Eliminiereinrichtung (10) umfasst, die einen von der Prüfvorrichtung (9) identifizierten Computerschädling (17) eliminiert.

27. Chipkarte (1) nach Anspruch 26, **dadurch gekennzeichnet, dass** die Eliminiereinrichtung (10) eingerichtet ist, einen identifizierten Computerschädling (17) aus den Daten (13) rückstandsfrei zu entfernen oder eine mit dem Computerschädling (17) befallene Datei (13) zu löschen oder zu markieren.

28. Chipkarte (1) nach einem der Ansprüche 16 bis 17 mit Anspruch 16, **dadurch gekennzeichnet, dass** die Chipkarte (1) eine Aktualisierungseinrichtung (11) umfasst, die eingerichtet ist, aktuelle Schädlingsinformationen von einem Sicherheitsserver (20) in den besonders gesicherten Speicherbereich (18) einzuspielen.

29. Chipkarte (1) nach Anspruch 28, **dadurch gekennzeichnet, dass** die Chipkarte (1) eine Sicherheitseinrichtung (8) umfasst, die eingerichtet ist, beim Aktualisieren durch die Aktualisierungseinrichtung (11) eine Authentisierung des Sicherheitsservers (20) oder eines die Aktualisierung durchführenden Benutzers durchzuführen.

30. Chipkarte (1) nach einem der Ansprüche 15 bis 29, **dadurch gekennzeichnet, dass** die Prüfeinrichtung (9) und/oder die Eliminiereinrichtung (10) und/oder die Aktualisierungseinrichtung (11) als von dem Prozessor (2) der Chipkarte (1) ausführbares Softwareprogramm realisiert sind.

31. Chipkarte (1) nach einem der Ansprüche 15 bis 30, **dadurch gekennzeichnet, dass** die Prüfeinrichtung (9) und/oder die Eliminiereinrichtung (10) und/oder die Aktualisierungseinrichtung (11) in einem gesicherten Speicherbereich (4) der Chipkarte abgelegt sind.

## Claims

1. A method for ensuring the integrity of data (13) located in a rewritable memory (5) of a chip card as a portable data carrier (1), having the step of checking the data (13) for infestation with computer malware items (17) in dependence on at least one specified condition, **characterized in that** the method is carried out by the data carrier (1), and that upon the step of checking the data (13) are checked with the help of malware information about potential computer malware items (17), which is stored on the data carrier (1).

2. The method according to claim 1, **characterized in that** the malware information comprises malware patterns (12) located in infested data (13) and upon the step of checking the data (13) are scanned for the malware patterns (12).

3. The method according to claim 2, **characterized in that** the data (13) comprise management data and useful data and upon the step of checking only the useful data are scanned for malware patterns (12).

4. The method according to any of claims 1 to 3, **characterized in that** the step of checking is carried out when, as a condition, the data carrier (1) is being activated.

5. The method according to any of claims 1 to 4, **characterized in that** a checking interrupted by a deactivation of the data carrier (1) is continued upon the next activation of the data carrier (1).

6. The method according to any of claims 1 to 5, **characterized in that** the step of checking is carried out when, as a condition, a writing access and/or a reading access to the data (13) is being effected.

7. The method according to any of claims 1 to 6, **characterized in that** the data (13) in the rewritable memory (5) are organized in files (14) and upon the step of checking files (14) which, as a condition, possess specified attributes are checked.

8. The method according to any of claims 1 to 7, **characterized in that** the variable memory (5) is organized in memory regions (16) and upon the step of checking data (13) present in a specified memory region (16) are checked.

9. The method according to any of claims 1 to 8, **characterized in that** upon the step of checking different check algorithms are used.

10. The method according to any of claims 1 to 9, **characterized in that** the step of checking is carried out as a background process.

11. The method according to any of claims 1 to 10, **characterized by** the step of eliminating a computer malware (17) from infested data (13), if upon the step of checking a computer malware (17) is identified.

12. The method according to claim 11, **characterized in that** upon the step of eliminating the computer malware item (17) is removed from the data (13) in residual-free fashion or a file (14) infested with the computer malware item (17) is deleted or marked.

13. The method according to any of claims 1 to 12 with claim 1, **characterized in that** the malware information is deposited in a particularly secured memory region (18) of the data carrier (1) and by the step of updating the malware information by means of importing current malware information from a security server (20) into the secured memory region (18).

14. The method according to claim 13, **characterized in that** upon the step of updating an authentication of the security server (20) or of a person carrying out the update is carried out.

15. A chip card as a portable data carrier (1) comprising a rewritable memory (5), a processor (2) and a checking device (9), **characterized in that** the checking device (9) is arranged to check data (13) located in the rewritable memory (5) in dependence on at least one specified condition for infestation with computer malware items (17) and that the chip card (1) comprises a separate memory region in which malware information about potential computer malware items (17) is stored, and the checking device (9) is arranged to check the data (13) with the help of the malware information.

16. The chip card (1) according to claim 15, **characterized in that** the separate memory region is a memory region (18) particularly secured against manipulation.

17. The chip card (1) according to claim 15 or 16, **characterized in that** the malware information comprises malware patterns (12) which can occur in data (13) infested with a computer malware item (17), and the checking device (9) is arranged to scan the data (13) for the malware patterns (12).

18. The chip card (1) according to claim 17, **characterized in that** the data (13) comprise management data and useful data and the checking device (9) is arranged to scan only the useful data for malware patterns (12).

19. The chip card (1) according to any of claims 15 to 18, **characterized in that** the checking device (9) is arranged to check the data (13), when, as a condition, the chip card (1) is being activated.

20. The chip card (1) according to any of claims 15 to 19, **characterized in that** the checking device (9) is arranged to continue a checking interrupted by a deactivation of the chip card (1) upon the next activation of the chip card (1).

21. The chip card (1) according to any of claims 15 to 20, **characterized in that** the checking device (9) is arranged to check the data (13), when, as a condition, a writing access and or reading access to the data (13) is being effected.

22. The chip card (1) according to any of claims 15 to 21, **characterized in that** the data (13) in the rewritable memory (5) are organized in files (14) and the checking device (9) is arranged to check such files (14) which possess attributes specified as a condition.

23. The chip card (1) according to any of claims 15 to 22, **characterized in that** the rewritable memory (5) is organized in memory regions (16) and the checking device (9) is arranged to check the data (13) present in a specified memory region (16).

24. The chip card (1) according to any of claims 15 to 23, **characterized in that** the checking device (9) is arranged to use different check algorithms.

25. The chip card (1) according to any of claims 15 to 24, **characterized in that** the checking device (9) is arranged to carry out the checking of the data (13) as a background process.

26. The chip card (1) according to any of claims 16 to 25, **characterized in that** the chip card (1) furthermore comprises an elimination device (10) which eliminates a computer malware item (17) identified by the checking apparatus (9).

27. The chip card (1) according to claim 26, **characterized in that** the elimination device (10) is arranged to remove an identified computer malware item (17) from the data (13) in a residual-free fashion or to delete or mark a file (13) infested with the computer malware item (17).

28. The chip card (1) according to any of claims 16 to 17 with claim 16, **characterized in that** the chip card (1) comprises an update device (11) which is arranged to import current malware information from a security server (20) into the particularly secured memory region (18).

29. The chip card (1) according to claim 28, **characterized in that** the chip card (1) comprises a security device (8) which is arranged to carry out, upon the updating by the update device (11), an authentication of the security server (20) or of a user carrying out the update.

30. The chip card (1) according to any of claims 15 to 29, **characterized in that** the checking device (9) and/or the elimination device (10) and/or the update device (11) are realized as software programme executable by the processor (2) of the chip card (1).

31. The chip card (1) according to any of claims 15 to 30, **characterized in that** the checking device (9) and/or the elimination device (10) and/or the update device (11) are deposited in a secured memory region (4) of the chip card.

## Revendications

1. Procédé destiné à assurer l'intégrité de données (13) se trouvant dans une mémoire (5) réinscriptible d'une carte à puce en tant que support de données portable (1), comprenant l'étape de l'examen des données (13) pour discerner s'il y a infestation par des parasites informatiques (17) en fonction d'au moins une condition prédéterminée, **caractérisé en ce que** le procédé est exécuté par le support de données (1) et que, à l'étape de l'examen, les données (13) sont examinées à l'aide d'informations sur des parasites, concernant des parasites informatiques (17) potentiels, mémorisées sur le support de données (1).

2. Procédé selon la revendication 1, **caractérisé en ce que** les informations sur des parasites comprennent des modèles de parasites (12) se trouvant dans des données (13) infestées et que, à l'étape de l'examen, les données (13) sont parcourues à la recherche des modèles de parasites (12).

3. Procédé selon la revendication 2, **caractérisé en ce que** les données (13) comprennent des données de gestion et des données utiles et que, à l'étape de l'examen, uniquement les données utiles sont parcourues à la recherche des modèles de parasites (12).

4. Procédé selon une des revendications de 1 à 3, **caractérisé en ce que** l'étape de l'examen est exécutée quand, en tant que condition, le support de données (1) est activé.

5. Procédé selon une des revendications de 1 à 4, **caractérisé en ce qu'**un examen interrompu par une désactivation du support de données (1) est poursuivi à la prochaine activation du support de données (1).

6. Procédé selon une des revendications de 1 à 5, **caractérisé en ce que** l'étape de l'examen est exécutée quand, en tant que condition, un accès en écriture et/ou un accès en lecture aux données (13) a lieu.

7. Procédé selon une des revendications de 1 à 6, **caractérisé en ce que** les données (13) sont, dans la mémoire (5) réinscriptible, organisées en des fichiers (14), et que, à l'étape de l'examen, des fichiers (14) sont examinés, lesquels, en tant que condition, possèdent des attributs prédéterminés.

8. Procédé selon une des revendications de 1 à 7, **caractérisé en ce que** la mémoire (5) variable est organisée en des zones de mémoire (16), et que, à l'étape de l'examen, les données (13) se trouvant dans une zone prédéterminée de mémoire (16) sont examinées.

9. Procédé selon une des revendications de 1 à 8, **caractérisé en ce que**, à l'étape de l'examen, différents algorithmes d'examen sont utilisés.

10. Procédé selon une des revendications de 1 à 9, **caractérisé en ce que** l'étape de l'examen est exécutée en tant que processus d'arrière-plan.

11. Procédé selon une des revendications de 1 à 10, **caractérisé par** l'étape de l'élimination d'un parasite informatique (17) de données (13) infestées dans le cas où, à l'étape de l'examen, un parasite informatique (17) est identifié.

12. Procédé selon la revendication 11, **caractérisé en ce que**, à l'étape de l'élimination, le parasite informatique (17) est enlevé des données (13) sans laisser de résidus, ou qu'un fichier (14) infesté par le parasite informatique (17) est effacé ou marqué.

13. Procédé selon une des revendications de 1 à 12 en corrélation avec la revendication 1, **caractérisé en ce que** les informations sur des parasites sont stockées dans une zone de mémoire (18) particulièrement sécurisée du support de données (1), et par l'étape de l'actualisation des informations sur des parasites au moyen d'une introduction d'informations actuelles sur des parasites d'un serveur de sécurité (20) dans la zone de mémoire (18) sécurisée.

14. Support de données selon la revendication 13, **caractérisé en ce que**, à l'étape de l'actualisation, une authentification du serveur de sécurité (20) ou d'une personne effectuant l'actualisation est effectuée.

15. Carte à puce en tant que support de données (1) portable, comprenant une mémoire (5) réinscriptible, un processeur (2) et un dispositif d'examen (9), **caractérisée en ce que** le dispositif d'examen (9) est conçu pour examiner des données (13) se trouvant dans la mémoire (5) réinscriptible en fonction d'au moins une condition prédéterminée pour discerner s'il y a infestation par des parasites informatiques (17), et **en ce que** la carte à puce (1) comprend une zone distincte de mémoire dans laquelle des informations sur des parasites, concernant des parasites informatiques (17) potentiels, sont stockées, et que le dispositif d'examen (9) est conçu pour examiner les données (13) à l'aide des informations sur des parasites.

16. Carte à puce (1) selon la revendication 15, **caractérisée en ce que** la zone distincte de mémoire est une zone de mémoire (18) particulièrement sécurisée contre les manipulations.

17. Carte à puce (1) selon la revendication 15 ou 16, **caractérisée en ce que** les informations sur des parasites comprennent des modèles de parasites (12) qui peuvent survenir dans des données (13) infestées par un parasite informatique (17), et que le dispositif d'examen (9) est conçu pour parcourir les données (13) à la recherche des modèles de parasites (12).

18. Carte à puce (1) selon la revendication 17, **caractérisée en ce que** les données (13) comprennent des données de gestion et des données utiles et que le dispositif d'examen (9) est conçu pour ne parcourir, à la recherche des modèles de parasites (12), que les données utiles.

19. Carte à puce (1) selon une des revendications de 15 à 18, **caractérisée en ce que** le dispositif d'examen (9) est conçu pour examiner les données (13) quand, en tant que condition, la carte à puce (1) est activée.

20. Carte à puce (1) selon une des revendications de 15 à 19, **caractérisée en ce que** le dispositif d'examen (9) est conçu pour poursuivre à la prochaine activation de la carte à puce (1) un examen interrompu par une désactivation de la carte à puce (1).

21. Carte à puce (1) selon une des revendications de 15 à 20, **caractérisée en ce que** le dispositif d'examen (9) est conçu pour examiner les données (13) quand, en tant que condition, un accès en écriture et/ou un accès en lecture aux données (13) a lieu.

22. Carte à puce (1) selon une des revendications de 15 à 21, **caractérisée en ce que** les données (13) sont, dans la mémoire (5) réinscriptible, organisées en des fichiers (14), et que le dispositif d'examen (9) est conçu pour examiner les fichiers (14) qui, en tant que condition, possèdent des attributs prédéterminés.

23. Carte à puce (1) selon une des revendications de 15 à 22, **caractérisée en ce que** la mémoire (5) réinscriptible est organisée en des zones de mémoire (16), et **en ce que** le dispositif d'examen (9) est conçu pour examiner les données (13) se trouvant dans une zone de mémoire (16) prédéterminée.

24. Carte à puce (1) selon une des revendications de 15 à 23, **caractérisée en ce que** le dispositif d'examen (9) est conçu pour utiliser différents algorithmes d'examen.

25. Carte à puce (1) selon une des revendications de 15 à 24, **caractérisée en ce que** le dispositif d'examen (9) est conçu pour effectuer l'examen des données (13) en tant que processus d'arrière-plan.

26. Carte à puce (1) selon une des revendications de 16 à 25, **caractérisée en ce que** la carte à puce (1) comprend en outre un dispositif d'élimination (10) qui élimine un parasite informatique (17) identifié par le dispositif d'examen (9).

27. Carte à puce (1) selon la revendication 26, **caractérisée en ce que** le dispositif d'élimination (10) est conçu pour enlever des données (13) sans laisser de résidus un parasite informatique (17) identifié, ou pour effacer ou marquer un fichier (13) infesté par le parasite informatique (17).

28. Carte à puce (1) selon une des revendications de 16 à 17 en corrélation avec la revendication 16, **caractérisée en ce que** la carte à puce (1) comprend un dispositif d'actualisation (11) qui est conçu pour introduire des informations sur des parasites d'un serveur de sécurité (20) dans la zone de mémoire (18) particulièrement sécurisée.

29. Carte à puce (1) selon la revendication 28, **caractérisée en ce que** la carte à puce (1) comprend un dispositif de sécurité (8) qui est conçu pour, lors de l'actualisation, effectuer par l'intermédiaire du dispositif d'actualisation (11) une authentification du serveur de sécurité (20) ou d'un utilisateur effectuant l'actualisation.

30. Carte à puce (1) selon une des revendications de 15 à 29, **caractérisée en ce que** le dispositif d'examen (9) et/ou le dispositif d'élimination (10) et/ou le dispositif d'actualisation (11) sont réalisés en tant que programme logiciel exécutable par le processeur (2) de la carte à puce (1).

31. Carte à puce (1) selon une des revendications de 15 à 30, **caractérisée en ce que** le dispositif d'examen (9) et/ou le dispositif d'élimination (10) et/ou le dispositif d'actualisation (11) sont stockés dans une zone de mémoire (4) sécurisée de la carte à puce.
